(19) Europäisches Patentamt
European Patent Office
Office européen des brevets

(11) **EP 4 597 362 A1**

(12) **EUROPEAN PATENT APPLICATION**
published in accordance with Art. 153(4) EPC

(43) Date of publication:
**06.08.2025   Bulletin 2025/32**

(21) Application number: **23878676.8**

(22) Date of filing: **26.06.2023**

(51) International Patent Classification (IPC):
**G06N 3/04** (2023.01)        **G06N 3/08** (2023.01)
**G06F 8/30** (2018.01)

(52) Cooperative Patent Classification (CPC):
**G06F 8/30; G06F 8/41; G06N 3/04; G06N 3/08**

(86) International application number:
**PCT/CN2023/102301**

(87) International publication number:
**WO 2024/082679 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.10.2022  CN 202211277782**

(71) Applicant: **Huawei Technologies Co., Ltd.
Shenzhen, Guangdong 518129 (CN)**

(72) Inventors:
• **JIAO, Jianbing
  Shenzhen, Guangdong 518129 (CN)**
• **XU, Shifeng
  Shenzhen, Guangdong 518129 (CN)**
• **LIN, Jiashu
  Shenzhen, Guangdong 518129 (CN)**
• **ZHOU, Jian
  Shenzhen, Guangdong 518129 (CN)**

(74) Representative: **Körber, Martin Hans et al
Mitscherlich PartmbB
Patent- und Rechtsanwälte
Karlstraße 7
80333 München (DE)**

(54) **METHOD AND APPARATUS FOR PROCESSING COMPUTATIONAL GRAPH**

(57)     This application provides a computational graph processing method and an apparatus. The computational graph processing method in this application includes: obtaining a to-be-compiled computational graph, where a dynamic shape is used for input data of the computational graph, and the computational graph includes a plurality of operators; partitioning the computational graph to obtain a plurality of subgraphs, where any one of the subgraphs includes at least one of the operators in the computational graph; generating a plurality of executable tasks through compiling based on the plurality of subgraphs; and running the computational graph based on the plurality of executable tasks. In this application, software compilation and efficient execution for a dynamic-shape network model can be implemented, and a program execution method with the computational graph as a core in the dynamic shape is implemented.

[FIG. 3]

300

Obtain a to-be-compiled computational graph — 301

↓

Partition the computational graph to obtain a plurality of subgraphs — 302

↓

Generate a plurality of executable tasks through compiling based on the plurality of subgraphs — 303

↓

Run the computational graph based on the plurality of executable tasks — 304

## Description

This application claims priority to Chinese Patent Application No. 202211277782.4, filed with the China National Intellectual Property Administration on October 19, 2022 and entitled "COMPUTATIONAL GRAPH PROCESSING METHOD AND APPARATUS", which is incorporated herein by reference in its entirety.

## TECHNICAL FIELD

This application relates to neural network technologies, and in particular, to a computational graph processing method and an apparatus.

## BACKGROUND

One or more dimensions dim of a dynamic shape is equal to -1, which are unknown during compilation, and a specific dim value is known only during actual running. For example, in [10, -1, 20, 30] and [10, -1, -1, 30], one or more dimensions are -1. Correspondingly, each dimension of a static shape is a known value, for example, [10, 10, 20, 30].

In a neural network model, when a dynamic shape is used for an input/output, how to efficiently compile and run the neural network model is a topic that the industry strives to resolve.

## SUMMARY

This application provides a computational graph processing method and an apparatus, to implement software compilation and efficient execution for a dynamic-shape network model, and implement a program execution method with a computational graph as a core in a dynamic shape.

According to a first aspect, this application provides a computational graph processing method, including: obtaining a to-be-compiled computational graph, where a dynamic shape is used for input data of the computational graph, and the computational graph includes a plurality of operators; partitioning the computational graph to obtain a plurality of subgraphs, where any one of the subgraphs includes at least one of the operators in the computational graph; generating a plurality of executable tasks through compiling based on the plurality of subgraphs; and running the computational graph based on the plurality of executable tasks.

In this embodiment of this application, in the dynamic shape, a graph scheduling software solution at a basic scheduling execution granularity of a subgraph (different from a stream scheduling mechanism at a granularity of a node) is used, to implement software compilation and efficient execution for a dynamic-shape network model, and implement a program execution method with the computational graph as a core in the dynamic shape.

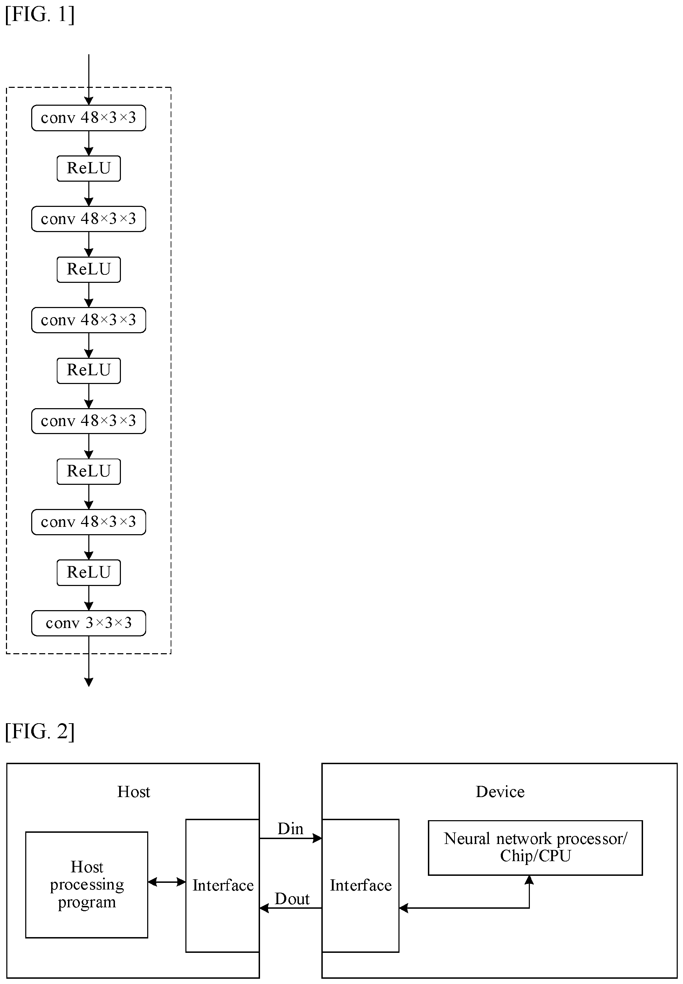

The dynamic shape is used for an input/output of the computational graph, to be specific, in the input/output, a shape indicating a pixel composition structure is a dynamic shape, a value of one or more dimensions is -1, and a dimension corresponding to -1 is unknown in a compilation phase. The computational graph may include a plurality of operators (that is, nodes). For example, in a computational graph shown in FIG. 1, each layer corresponds to one operator, and the computational graph includes 11 operators.

An input/output may be sliced based on an operator feature. For example, a convolution operator can slice the input/output into a plurality of continuous equal pieces or slice the input/output into unequal pieces. In this way, the input/output can be sliced into a plurality of pieces of data, to reduce an amount of each piece of data and increase a quantity of operators, and improve execution efficiency through concurrent execution.

In this embodiment of this application, a subgraph partitioning policy may include that continuous operators that have a same slice manner are included in a same subgraph, or continuous operators that have different slice manners are included in a same subgraph. In an example of operators that have a same slice manner, a computational graph has a total of 10 operators: an operator 1 to an operator 10. The operator 1 to the operator 3 support a same slice manner. In this case, the operator 1 to the operator 3 may be included in a same subgraph. Although the operator 4 and the operator 6 have a same slice manner, the operator 4 and the operator 6 are not continuous. Therefore, the operator 4 is included in one subgraph, the operator 5 is included in another subgraph, and the operator 6 is included in still another subgraph. The operator 7 to the operator 10 support a same slice manner. In this case, the operator 7 to the operator 10 may be included in a same subgraph. It can be learned that, in the plurality of subgraphs obtained through partitioning of the computational graph, there may be a subgraph that includes only one operator, or there may be a subgraph that includes a plurality of operators. When a first subgraph includes n operators, the n operators are continuously arranged, input data slice manners supported by the n operators are the same, $n \geq 1$, and the first subgraph is any one of the plurality of subgraphs.

In this embodiment of this application, static compilation may be performed on the plurality of subgraphs separately to obtain a plurality of thread tasks. Then to-be-processed data is obtained. Dynamic compilation is performed on the plurality of thread tasks based on the to-be-processed data, to obtain the plurality of executable tasks. It can be learned that a compilation process for the computational graph may include two parts: static compilation and dynamic compilation.

In a static compilation process, a total quantity of engines in the first subgraph is obtained, where the first subgraph is any one of the plurality of subgraphs, the first subgraph includes m operators, and $m \geq 1$; N is deter-

mined based on the total quantity of engines in the first subgraph, where N>1 and N≥ the total quantity of engines, and N indicates a quantity of threads that can run concurrently; and N thread tasks are obtained, where any one of the thread tasks includes slice blocks of the m operators, and the N thread tasks correspond to N threads.

In this embodiment of this application, the computational graph may be partitioned into the plurality of subgraphs in a compilation state based on a hardware resource status, to implement shape-independent static processing on the computational graph and generate a thread task. An execution step related to a static graph is executed before running, so that compilation overheads during running can be reduced.

Optionally, a join operator may be inserted at a start and an end of the first subgraph. The join operator may include inlabel, AT-start, AT-end, outlabel, and the like. These operators may be customized to implement a join function.

Optionally, the m operators included in the first subgraph may be optimized. The optimization may include various fusion optimization, single-operator optimization, constant folding optimization, dtype optimization, format optimization, and the like.

Optionally, a cache operation may be performed on the N thread tasks. The cache operation (such as prefetch, invalid, or writeback) may be performed on the plurality of operators in the subgraph.

In a dynamic compilation process, a dynamic shape of the to-be-processed data is obtained; and unknown parameters in the plurality of thread tasks are updated based on the dynamic shape of the to-be-processed data, to obtain the plurality of executable tasks.

In this embodiment of this application, a concurrency parameter of the thread task may be calculated based on an actual dynamic shape, a dynamic shape and a thread (thread) concurrency related parameter in the thread task are updated (for example, a part related to -1 in the shape in the thread task is refreshed). Finally, an executable task is generated, and the final executable task is generated. During running dynamic compilation and dynamic execution, a host task and a device task may be executed in a pipelined manner on a host and a device to improve execution efficiency.

In addition, threadnum may be obtained through real-time calculation based on the dynamic shape of the to-be-processed data, and threadnum indicates a quantity of slices of the to-be-processed data.

In a possible implementation, the dynamic shape is substituted into a preset formula to obtain threadnum. The preset formula indicates a correspondence between the dynamic shape and threadnum.

This is also referred to as a cache policy. When subgraphs are concurrently executed, all data is kept in a cache, and a bandwidth of the cache is used to improve subgraph execution performance. When all node threads in the subgraph are concurrent, a sum of maximum values of memory consumption of input+output+workspace+prefetch of nodes on each thread is less than or equal to a cache size. Because an actual shape size is unknown in the compilation state, the shape is set to be a variable, and fitting, interpolation, or another manner is used to estimate a variable formula of an L2 cache resource. In this way, when an actual shape is obtained, the variable formula can be quickly substituted to calculate a minimum value of slice threadnum.

In a possible implementation, threadnum is obtained for a purpose that the engine in the first subgraph works in full load.

This is also referred to as a computing resource policy. When subgraphs are concurrently executed, each engine runs a computing resource at full capacity. blockdim of a same type of engine is equal to an integer multiple of a chip core. A bound engine runs a computing resource runs in full load, and a non-bound engine that runs a computing resource does not cause blockage to running of the computing resource run by the bound engine. In the compilation state, an optimal pipeline of the engine for concurrency is evaluated based on a fitted shape, and a recommended threadnum value that satisfies the optimal pipeline is provided. A threadnum value is actually obtained in a running state based on a cache resource policy.

threadnum sub-tasks included in the first subgraph are scheduled based on the plurality of executable tasks by reusing the executable task. threadnum indicates the quantity of the slices of the to-be-processed data of the first subgraph, each sub-task includes m operators, m≥1, and the first subgraph is any one of the plurality of subgraphs.

In this embodiment of this application, the executable task is delivered at a granularity of a subgraph, and tasks at the granularity of the subgraph are concurrently scheduled and executed, so that resource concurrency efficiency can be improved.

In a possible implementation, a bandwidth is allocated to the plurality of executable tasks for a purpose of minimizing total running duration.

It may also be referred to as a QoS policy. A QoS value of a thread subtask is adjusted based on the foregoing optimal pipeline. When the subgraphs are concurrently executed, priorities of computing resources and bandwidths are coordinated to ensure efficient execution of the entire graph.

According to a second aspect, this application provides a processing apparatus, including: an obtaining module, configured to obtain a to-be-compiled computational graph, where a dynamic shape is used for input data of the computational graph, and the computational graph includes a plurality of operators; a partitioning module, configured to partition the computational graph to obtain a plurality of subgraphs, where any one of the subgraphs includes at least one of the operators in the computational graph; a compiling module, configured to generate a plurality of executable tasks through compiling based on the plurality of subgraphs; and a running module, configured to run the computational graph based on the plurality of executable tasks.

In a possible implementation, the partitioning module is specifically configured to: obtain slice information of the plurality of operators, where the slice information indicates an input data slice manner supported by a corresponding operator; and obtain the plurality of subgraphs based on the slice information of the plurality of operators.

In a possible implementation, when a first subgraph includes n operators, the n operators are continuously arranged, input data slice manners supported by the n operators are the same, n>1, and the first subgraph is any one of the plurality of subgraphs.

In a possible implementation, the compiling module is specifically configured to: perform static compilation on the plurality of subgraphs separately to obtain a plurality of thread tasks; obtain to-be-processed data; and perform dynamic compilation on the plurality of thread tasks based on the to-be-processed data, to obtain the plurality of executable tasks.

In a possible implementation, the compiling module is specifically configured to: obtain a total quantity of engines in the first subgraph, where the first subgraph is any one of the plurality of subgraphs, the first subgraph includes m operators, and m≥1; determine N based on the total quantity of engines in the first subgraph, where N>1, and N indicates a quantity of threads that can run concurrently; and obtain N thread tasks, where any one of the thread tasks includes m structures, and the N thread tasks correspond to N threads.

In a possible implementation, the compiling module is specifically configured to: obtain a dynamic shape of the to-be-processed data; and update unknown parameters in the plurality of thread tasks based on the dynamic shape of the to-be-processed data, to obtain the plurality of executable tasks.

In a possible implementation, the compiling module is further configured to obtain threadnum based on the dynamic shape of the to-be-processed data, and threadnum indicates a quantity of slices of the to-be-processed data.

In a possible implementation, the compiling module is specifically configured to substitute the dynamic shape into a preset formula to obtain threadnum. The preset formula indicates a correspondence between the dynamic shape and threadnum.

In a possible implementation, the compiling module is specifically configured to obtain threadnum for a purpose that the engine in the first subgraph works in full load.

In a possible implementation, the compiling module is further configured to insert a join operator at a start and an end of the first subgraph.

In a possible implementation, the compiling module is further configured to optimize the m operators included in the first subgraph.

In a possible implementation, the compiling module is further configured to perform a cache operation on the N thread tasks.

In a possible implementation, the running module is specifically configured to schedule, based on the plurality of executable tasks, threadnum sub-tasks included in the first subgraph by reusing the executable task. threadnum indicates the quantity of the slices of the to-be-processed data of the first subgraph, each sub-task includes m operators, m≥1, and the first subgraph is any one of the plurality of subgraphs.

In a possible implementation, the running module is further configured to allocate a bandwidth to the plurality of executable tasks for a purpose of minimizing total running duration.

According to a third aspect, this application provides a device, including: one or more processors; and a memory, configured to store one or more programs. When the one or more programs are executed by the one or more processors, the one or more processors are enabled to implement the method according to any one of the implementations of the first aspect.

According to a fourth aspect, this application provides a computer-readable storage medium, including a computer program. When the computer program is executed on a computer, the computer is enabled to perform the method according to any one of the implementations of the first aspect.

According to a fifth aspect, this application provides a computer program product. The computer program product includes computer program code. When the computer program code is run on a computer, the computer is enabled to perform the method according to any one of the implementations of the first aspect.

BRIEF DESCRIPTION OF DRAWINGS

FIG. 1 is a diagram of an example of a computational graph;

FIG. 2 is a diagram of a structure of an example of a hardware system according to this application;

FIG. 3 is a flowchart of a process 300 of a computational graph processing method according to this application;

FIG. 4 is a diagram of subgraph slicing;

FIG. 5 is a diagram of join operators;

FIG. 6 is a diagram of dynamic compilation;

FIG. 7 is a diagram of an implementation process of subgraph running; and

FIG. 8 is a diagram of a structure of a processing apparatus 800 according to an embodiment of this application.

DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

It should be understood that in this application, "at least one (item)" refers to one or more, and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Embodiments of this application relate to application of a neural network. For ease of understanding, the following first explains and describes related terms.

1. Neural network

A neural network (neural Network, NN) is a machine learning model. The neural network may include neurons. The neuron may be an operation unit that uses $x_s$ and an intercept of 1 as inputs, where an output of the operation unit may be as follows:

$$h_{W,b}(x) = f(W^T x) = f\left(\sum_{s=1}^{n} W_s x_s + b\right) \quad (1\text{-}1)$$

s=1, 2, ..., or n, n is a natural number greater than 1, $W_s$ is a weight of $x_s$, and b is bias of the neuron. f is an activation function (activation function) of the neural unit, and is used to introduce a non-linear characteristic into the neural network, to convert an input signal in the neural unit into an output signal. The output signal of the activation function may be used as an input of a next convolutional layer. The activation function may be a non-linear function such as ReLU. The neural network is a network formed by connecting many single neurons together. To be specific, an output of a neuron may be an input of another neuron. An input of each neuron may be connected to a local receptive field (local receptive field) of a previous layer to extract a feature of the local receptive field. The local receptive field may be a region including several neurons.

2. Multi-layer perception (multi-layer perception, MLP)

An MLP is a simple deep neural network (deep neural network, DNN) (different layers are fully connected), and is also referred to as a multi-layer neural network. The MLP may be understood as a neural network with a plurality of hidden layers. There is no special measurement criterion for "a plurality of" herein. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN looks complicated, work of each layer is actually not complicated. In simple terms, as shown in the following linear relationship expression: $\vec{y} = \alpha(W\vec{x} + \vec{b})$. $\vec{x}$ is an input vector, $\vec{y}$ is an output vector, $\vec{b}$ is an offset vector, $\vec{b}$ is a weight matrix (also referred to as a coefficient), and $\alpha()$ is an activation function. At each layer, the output vector $\vec{y}$ is obtained by performing such a simple operation on the input vector $\vec{x}$. Because there are a large quantity of DNN layers, there are a large quantity of coefficients W and offset vectors $\vec{b}$. Definitions of these parameters in the DNN are as follows: The coefficient W is used as an example. It is assumed that in a DNN having three layers, a linear coefficient from a $4^{th}$ neuron at a $2^{nd}$ layer to a $2^{nd}$ neuron at a $3^{rd}$ layer is defined as $W_{24}^{3}$. The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that the input layer does not have the W coefficient. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of a trained deep neural network (a weight matrix formed by vectors W at many layers).

3. Convolutional neural network

The convolutional neural network (convolutional neuron network, CNN) is a deep neural network with a convolutional structure and a deep learning (deep learning) architecture. In the deep learning architecture, multi-layer learning is performed at different abstract levels according to a machine learning algorithm. As a deep learning architecture, the CNN is a feed-forward (feed-forward) artificial neural network, and each neuron in the feed-forward artificial neural network may respond to an image input to the feed-forward artificial neural network. The convolutional neural network includes a feature extractor constituted by a convolutional layer and a pooling layer. The feature extractor may be considered as a filter. A convolution process may be considered as using a trainable filter to perform convolution on an input image or a convolutional feature map (feature map).

The convolutional layer is a neuron layer that is in the convolutional neural network and at which convolution processing is performed on an input signal. The convolutional layer may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix is usually used to process pixels at a granularity level of one pixel (or two pixels, depending on a value of a stride (stride)) in a horizontal direction on the input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows*columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. Sizes of the plurality of weight matrices (rows*columns) are the same. Sizes of feature maps extracted from the plurality of weight matrices with the same size are also the same, and then the plurality of extracted feature maps with the same size are combined to form an output of the convolution operation. Weight values in these weight matrices need to be obtained through a large amount of training in actual application. Each weight matrix including weight values obtained through training may be used to extract information from the input image, so that the convolutional neural network performs correct prediction. When the convolutional neural network has a plurality of convolutional layers, a large quantity of general features are usually extracted at an initial convolutional layer. The general feature may also be referred to as a low-level feature. As a depth of the convolutional neural network increases, a feature extracted at a subsequent convolutional layer is more complex, for example, a high-level semantic feature. A feature with higher-level semantics is more applicable to a to-be-resolved problem.

A quantity of training parameters often needs to be reduced. Therefore, a pooling layer often needs to be periodically introduced after the convolutional layer. One convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to perform sampling on the input image to obtain an image with a relatively small size. The average pooling operator may be used to perform calculation on pixel values in the image in a specific range, to generate an average value, and the average value is used as an average pooling result. The maximum pooling operator may be used to select a pixel with a maximum value in a specific range as a maximum pooling result. In addition, similar to that the size of the weight matrix at the convolutional layer needs to be related to a size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

After processing performed at the convolutional layer/pooling layer, the convolutional neural network is not ready to output required output information. As described above, at the convolutional layer/pooling layer, only a feature is extracted, and parameters resulting from the input image are reduced. However, to generate final output information (required class information or other related information), the convolutional neural network needs to use the neural network layer to generate an output of one required type or a group of required types. Therefore, the convolutional neural network layer may include a plurality of hidden layers. Parameters included in the plurality of hidden layers may be obtained through pre-training based on related training data of a specific task type. For example, the task type may include image recognition, image classification, and super-resolution image reconstruction.

Optionally, at the neural network layer, the plurality of hidden layers are followed by the output layer of the entire convolutional neural network. The output layer has a loss function similar to a categorical cross entropy, and the loss function is specifically used to calculate a prediction error. Once forward propagation of the entire convolutional neural network is completed, reverse propagation is started to update a weight value and a deviation of each layer mentioned above, to reduce a loss of the convolutional neural network and an error between a result output by the convolutional neural network by using the output layer and an ideal result.

4. Recurrent neural network

A recurrent neural network (recurrent neural network, RNN) is used to process sequence data. In a conventional neural network model, layers from an input layer to a hidden layer and then to an output layer are fully connected, while nodes in each layer are not connected. Such a common neural network resolves many problems, but is still incapable of resolving many other problems. For example, to predict a next word in a sentence, a previous word usually needs to be used, because the previous word and the next word in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are connected, and an input of the hidden layer not only includes an output of the input layer, but also includes an output of the hidden layer at a previous moment. Theoretically, the RNN can process sequence data of any length. Training for the RNN is the same as training for a conventional CNN or DNN. An error back propagation algorithm is also used, but there is a difference: If the RNN is expanded, a parameter such as W of the RNN is shared. This is different from the conventional neural network described in the foregoing example. In addition, during use of a gradient descent algorithm, an output in each step depends not only on a network in a current step, but also on a network status in several previous steps. This learning algorithm is referred to as a back propagation through time (back propagation through time, BPTT) algorithm.

Why is the recurrent neural network still required when the convolutional neural network is available? A reason is simple. In the convolutional neural network, there is a premise that elements are independent of each other, and an input and an output are also independent, such as a cat and a dog. However, in the real world, many elements are interconnected. For example, stocks change over time. For another example, a person says: "I love traveling, and my favorite place is Yunnan. I will go there when I have a chance." People should know that the person will go to "Yunnan". Because people perform inference from the context. However, how do machines do that? Then, the RNN emerges. The RNN is intended to make the machine capable of memorizing like a human. Therefore, an output of the RNN needs to depend on current input information and historical memorized information.

5. Loss function

In a process of training a deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before a first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training for the deep neural network is a process of minimizing the loss as much as possible.

6. Back propagation algorithm

A convolutional neural network may correct a value of a parameter in an initial super-resolution model in a training process by using an error back propagation (back propagation, BP) algorithm, so that an error loss of reconstructing a super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

## 7. Generative adversarial network

A generative adversarial network (generative adversarial network, GAN) is a deep learning model. The model includes at least two modules: a generative model (generative model) and a discriminative model (discriminative model). The two modules learn from each other, to generate a better output. Both the generative model and the discriminative model may be neural networks, and may be specifically deep neural networks or convolutional neural networks. A basic principle of the GAN is as follows: Using a GAN for generating an image as an example, it is assumed that there are two networks: G (Generator) and D (Discriminator). G is a network for generating an image. G receives random noise z, and generates the image by using the noise, where the image is denoted as G(z). D is a discriminative network used to determine whether an image is "real". An input parameter of D is x, x represents an image, and an output D(x) represents a probability that x is a real image. If a value of D(x) is 1, it indicates that the image is 100% real. If the value of D(x) is 0, it indicates that the image cannot be real. In a process of training the generative adversarial network, a purpose of the generative network G is to generate an image that is as real as possible to deceive the discriminative network D, and a purpose of the discriminative network D is to distinguish between the image generated by G and a real image as much as possible. In this way, a dynamic "gaming" process, to be specific, "adversary" in the "generative adversarial network", exists between G and D. A final gaming result is that in an ideal state, G may generate an image G(z) that is to be difficultly distinguished from a real image, and it is difficult for D to determine whether the image generated by G is real, to be specific, D(G(z))=0.5. In this way, an excellent generative model G is obtained, and can be used to generate an image.

## 8. Computational graph

In embodiments of this application, a neural network model may use a computational graph to express layers (layer) and a connection relationship between the layers. FIG. 1 is a diagram of an example of a computational graph. As shown in FIG. 1, the computational graph includes six convolutional layers and five activation layers ReLU, and a size of a convolution kernel is 3*3. In other words, the computational graph includes a total of 11 operators (also referred to as a node (Node)), and one operator corresponds to the foregoing one layer (for example, the convolutional layer or the activation layer). According to an order from left to right, an output of a previous layer may be used as an input of a next layer. An input of a 1st operator is an input of the computational graph, and an output of a last operator is an output of the computational graph. It should be noted that the computational graph may have any topology structure of the foregoing neural network. This is not specifically limited herein.

The computational graph can implement some functions in use, such as image recognition, intelligent translation, and intelligent recommendation. Before the foregoing function is implemented, the computational graph needs to be compiled to generate an executable expression, and the executable expression is run in a hardware environment, to perform the function of the computational graph. It should be noted that the executable expression may be a file, a data structure of a program, or the like. This is not specifically limited in embodiments of this application.

## 9. Dynamic shape

In embodiments of this application, a dynamic shape is used for an input/output of a computational graph. The dynamic shape (also referred to as a dynamic tensor/dynamic shape/unknown shape) indicates that one or more dimensions in a shape of an input/output are -1 (that is, dim=-1). The dynamic shape is unknown during compilation and a specific dim value is known only during actual running. For example,

(1) In [10, -1, 20, 30] and [10, -1, -1, 30], if one or more dimensions are -1, this is a dynamic shape.
(2) In [10, 10, 20, 30], if each dimension is a known value, this is a static (known) shape.

In the computational diagram, a concept of a shape may be used to indicate an arrangement of the input/output (input/output) in a memory, and may also be understood as a composition structure of the input/output. In embodiments of this application, the input/output may be an image, or may be a voice, a text, or the like. This is not specifically limited herein. For example, an image input is used as an example. A size of a two-dimensional image may be represented as 100*50, and a size of a three-dimensional image may be represented as 3*100*50 in red, green, and blue. In addition, if a quantity of images is 100, the size of the three-dimensional image may be represented as 100*3*100*50. A shape may be considered as a layout of pixels of an input image in a memory.

The dynamic shape may be understood that pixels of an image that needs to be processed each time are different. For example, pixels are 100*50 this time, pixels are 10*5 next time, and then pixels are 1000*500 next time. It may also be understood as that a statement that needs to be processed each time is different, for example, a length and a character of the statement are different. In addition, a specification of a to-be-processed object is not fixed.

For example, there are 100 images, and each image includes red, yellow, and blue, and a size is 100*50. In this case, the images may be represented as shape [100, 3, 100, 50]. In this case, input data of the computational graph includes actual data (pixel values of all pixels) and the foregoing shape (indicating a layout of all the pixels). Output data of the computational graph also includes actual data (pixel values of all pixels) and a shape (indicating a layout of all the pixels). In this case, the shape of the output data, for example, a shape [50, 3, 100, 50], may be the same as or different from the shape of the input data.

FIG. 2 is a diagram of a structure of an example of a hardware system according to this application. As shown in FIG. 2, a processing program on a host (host) delivers a compiled model to a device (device), and a neural network processor/chip/central processing unit (central processing unit, CPU) on the device executes a neural network model. The model may be compiled offline on another personal computer (personal computer, PC) or on the host.

It should be noted that the host and the device in this application may be integrated into a same electronic device to jointly complete a storage operation, and the electronic device has a storage capability. Alternatively, the host and the device may be separately disposed on different electronic devices. For example, the host is disposed on user equipment such as a mobile phone or a tablet computer, and the device is disposed on a neural network processor.

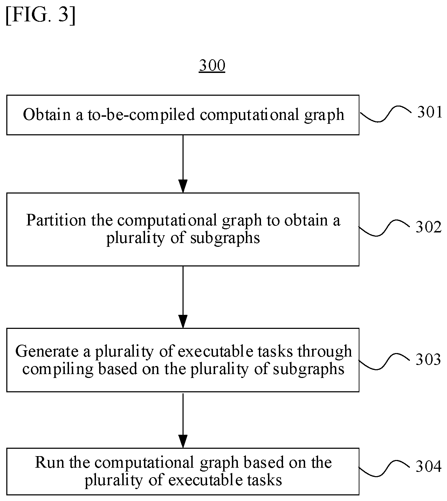

FIG. 3 is a flowchart of a process 300 of a computational graph processing method according to this application. As shown in FIG. 3, the process 300 may be jointly performed by the foregoing host and device. The process 300 is described as a series of steps or operations. It should be understood that the process 300 may be executed in various sequences and/or simultaneously, and is not limited to an execution sequence shown in FIG. 3. The process 300 includes the following steps.

Step 301: Obtain a to-be-compiled computational graph.

In this embodiment of this application, a dynamic shape is used for an input/output (input/output) of the computational graph, to be specific, in the input/output, a shape indicating a pixel composition structure is a dynamic shape, a value of one or more dimensions is -1, and a dimension corresponding to -1 is unknown in a compilation phase.

As described above, the computational graph may include a plurality of operators (that is, nodes). For example, in the computational graph shown in FIG. 1, each layer corresponds to one operator, and the computational graph includes 11 operators.

Step 302: Partition the computational graph to obtain a plurality of subgraphs.

In this embodiment of this application, slice information of the plurality of operators included in the computational graph may be obtained. The slice information indicates an input/output slice manner supported by a corresponding operator. Then the plurality of subgraphs are obtained through partitioning based on slice information features of the plurality of operators.

An input/output may be sliced based on an operator feature. For example, a convolution operator can slice the input/output into a plurality of continuous equal pieces or slice the input/output into unequal pieces. In this way, the input/output can be sliced into a plurality of pieces of data, to reduce an amount of each piece of data and increase a quantity of operators, and improve execution efficiency through concurrent execution.

In this embodiment of this application, a subgraph partitioning policy may include that continuous operators that have a same slice manner are included in a same subgraph, or continuous operators that have different slice manners are included in a same subgraph. In an example of operators that have a same slice manner, a computational graph has a total of 10 operators: an operator 1 to an operator 10. The operator 1 to the operator 3 support a same slice manner. In this case, the operator 1 to the operator 3 may be included in a same subgraph. Although the operator 4 and the operator 6 have a same slice manner, the operator 4 and the operator 6 are not continuous. Therefore, the operator 4 is included in one subgraph, the operator 5 is included in another subgraph, and the operator 6 is included in still another subgraph. The operator 7 to the operator 10 support a same slice manner. In this case, the operator 7 to the operator 10 may be included in a same subgraph. It can be learned that, in the plurality of subgraphs obtained through partitioning of the computational graph, there may be a subgraph that includes only one operator, or there may be a subgraph that includes a plurality of operators. When a first subgraph includes n operators, the n operators are continuously arranged, input data slice manners supported by the n operators are the same, n≥1, and the first subgraph is any one of the plurality of subgraphs.

Step 303: Generate a plurality of executable tasks through compiling based on the plurality of subgraphs.

In this embodiment of this application, static compilation may be performed on the plurality of subgraphs separately to obtain a plurality of thread tasks. Then to-be-processed data is obtained. Dynamic compilation is performed on the plurality of thread tasks based on the to-be-processed data, to obtain the plurality of executable tasks. It can be learned that a compilation process for the computational graph may include two parts: static compilation and dynamic compilation.

In a static compilation process, a total quantity of engines in the first subgraph is obtained, where the first subgraph is any one of the plurality of subgraphs, the first subgraph includes m operators, and m≥1; N is determined based on the total quantity of engines in the first subgraph, where N>1 and N≥ the total quantity of engines, and N indicates a quantity of threads that can run concurrently; and N thread tasks are obtained, where any one of the thread tasks includes slice blocks of the m operators, and the N thread tasks correspond to N threads.

In this embodiment of this application, the computational graph may be partitioned into the plurality of subgraphs in a compilation state based on a hardware resource status, to implement shape-independent static processing on the computational graph and generate a thread task. An execution step related to a static graph is executed before running, so that compilation overheads during running can be reduced.

Optionally, a join operator may be inserted at a start and an end of the first subgraph. The join operator may include inlabel, AT-start, AT-end, outlabel, and the like. These operators may be customized to implement a join function.

Optionally, the m operators included in the first subgraph may be optimized. The optimization may include various fusion optimization, single-operator optimization, constant folding optimization, dtype optimization, format optimization, and the like.

Optionally, a cache operation may be performed on the N thread tasks. The cache (Cache) operation (such as prefetch, invalid, or writeback) may be performed on the plurality of operators in the subgraph.

In a dynamic compilation process, a dynamic shape of the to-be-processed data is obtained; and unknown parameters in the plurality of thread tasks are updated based on the dynamic shape of the to-be-processed data, to obtain the plurality of executable tasks.

In this embodiment of this application, a concurrency parameter of the thread task may be calculated based on an actual dynamic shape, a dynamic shape and a thread (thread) concurrency related parameter in the thread task are updated (for example, a part related to -1 in the shape in the thread task is refreshed). Finally, an executable task is generated, and the final executable task is generated. During running dynamic compilation and dynamic execution, a host task and a device task may be executed in a pipelined manner on a host and a device to improve execution efficiency.

In addition, a quantity of slices (threadnum) of the to-be-processed data may be obtained through real-time calculation based on the dynamic shape of the to-be-processed data.

In a possible implementation, the dynamic shape is substituted into a preset formula to obtain threadnum. The preset formula indicates a correspondence between the dynamic shape and threadnum.

This is also referred to as a cache policy. When subgraphs are concurrently executed, all data is kept in a cache, and a bandwidth of the cache is used to improve subgraph execution performance. When all node threads in the subgraph are concurrent, a sum of maximum values of memory consumption of input+output+workspace+prefetch of nodes on each thread is less than or equal to a cache size. Because an actual shape size is unknown in the compilation state, the shape is set to be a variable, and fitting, interpolation, or another manner is used to estimate a variable formula of an L2 cache resource. In this way, when an actual shape is obtained, the variable formula can be quickly substituted to calculate a minimum value of slice threadnum.

In a possible implementation, threadnum is obtained for a purpose that the engine in the first subgraph works in full load.

This is also referred to as a computing resource policy. When subgraphs are concurrently executed, each engine runs a computing resource at full capacity. blockdim of a same type of engine is equal to an integer multiple of a chip core. A bound engine runs a computing resource runs in full load, and a non-bound engine that runs a computing resource does not cause blockage to running of the computing resource run by the bound engine. In the compilation state, an optimal pipeline of the engine for concurrency is evaluated based on a fitted shape, and a recommended threadnum value that satisfies the optimal pipeline is provided. A threadnum value is actually obtained in a running state based on a cache resource policy.

Step 304: Run the computational graph based on the plurality of executable tasks.

threadnum sub-tasks included in the first subgraph are scheduled based on the plurality of executable tasks by reusing the executable task. threadnum indicates the quantity of the slices of the to-be-processed data of the first subgraph, each sub-task includes m operators, m≥1, and the first subgraph is any one of the plurality of subgraphs.

In this embodiment of this application, the executable task is delivered at a granularity of a subgraph, and tasks at the granularity of the subgraph are concurrently scheduled and executed, so that resource concurrency efficiency can be improved.

In a possible implementation, a bandwidth is allocated to the plurality of executable tasks for a purpose of minimizing total running duration.

It may also be referred to as a QoS policy. A QoS value of a thread subtask is adjusted based on the foregoing optimal pipeline. When the subgraphs are concurrently executed, priorities of computing resources and bandwidths are coordinated to ensure efficient execution of the entire graph.

In this embodiment of this application, in the dynamic shape, a graph scheduling software solution at a basic scheduling execution granularity of a subgraph (different from a stream scheduling mechanism at a granularity of a node) is used, to implement software compilation and efficient execution for a dynamic-shape network model, and implement a program execution method with the computational graph as a core in the dynamic shape.

The following describes the foregoing solution by using a specific embodiment.

1. Static compilation

In static compilation, a subgraph scope (scope) policy is specified. A computational graph is given. A scope (scope) is determined based on the slice information (a scope of a same slice axis is found based on the slice information). The slice is performed in an automatic threading (threading) mode (which is a continuous equal slice mode, and if a tail block and a non-tail block cannot be evenly distributed, the tail block and the non-tail block may be different). A window size (window size) (a quantity of threads executed at the same time on a device) is fixed. threadnum is used as a variable, fitting evaluation is performed on a resource, a fast formula is evaluated in a compilation state, and slice threadnum is calculated by substituting an actual shape into the fast formula in a running state. An evaluation resource includes but is not limited to a cache resource, a computing resource, and the like.

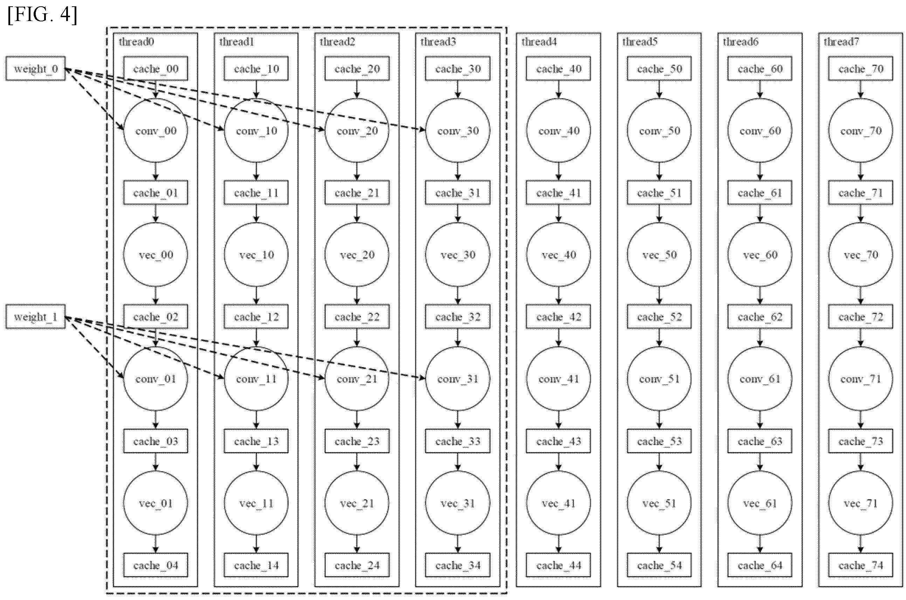

FIG. 4 is a diagram of subgraph slicing. As shown in FIG. 4, a subgraph in this example includes four operators (which are sequentially conv, vec, conv, and vec from top to bottom), and an input/output of the subgraph may be sliced into eight segments (for a manner of obtaining a quantity of segments, refer to the following). Eight threads may process eight pieces of data, and each thread corresponds to a same operator.

1. Estimation policy: estimating the specified subgraph scope in the compilation state to reduce computing duration in the running state.

(1) A fixed thread window size=N (N≥total quantity of engines in the subgraph).

Threads of which a quantity is thread windows size are used to express a thread subtask context (thread subtask context) task in the automatic threading. Even if actual threadnum is unknown, a subgraph-level task is expressed in an automatic threading method. When the quantity of threads is greater than or less than the thread windows size, tasks in the subgraph are adjusted during dynamic compilation.

(2) Cache policy: When subgraphs are concurrently processed, all data is kept in a cache, and a bandwidth of the cache is used to improve subgraph execution performance. When all node (node) threads in the subgraph are concurrent, a sum of maximum values of memory consumption of input+output+workspace+prefetch of nodes on each thread is less than or equal to a cache size. Because an actual shape size is unknown in the compilation state, the shape is set to be a variable, and fitting, interpolation, or another manner is used to estimate a variable formula of an L2 cache resource. In this way, when an actual shape is obtained, the variable formula can be quickly substituted to calculate a minimum value of slice threadnum. Because read and write performance of a secondary memory is poor, an input and output can be read and written from the cache to improve read and write efficiency.

(3) Computing resource policy: When subgraphs are concurrently executed, each engine runs a computing resource at full capacity. blockdim of a same type of engine is equal to an integer multiple of a chip core. A bound engine runs a computing resource runs in full load, and a non-bound engine that runs a computing resource does not cause blockage to running of the computing resource run by the bound engine. In the compilation state, an optimal pipeline of the engine for concurrency is evaluated based on a fitted shape, and a recommended threadnum value that satisfies the optimal pipeline is provided. A threadnum value is actually obtained in a running state based on a cache resource policy. Because full load degrees of engines are different, an optimal case may be found. This method may include finding an optimal value through optimization. It should be understood that another method may be used (for example, performing a pipeline arrangement manner on all tasks; determining a quantity of concurrent computing resources according to a quantity of engines, a quantity of concurrent threads≥a quantity of engines, and the like). This is not limited.

The foregoing (2) and (3) are in an and/or relationship, to be specific, threadnum may be obtained by using only (2) or (3), or threadnum may be obtained by using (2) and (3).

2. Task compilation and generation

(1) The operators in the subgraph are optimized at a granularity of a subgraph, including various fusion optimization, single-operator optimization, constant folding optimization, dtype optimization, format optimization, and the like.

(2) A cache operation (prefetch, invalid, and writeback) is performed on multi-thread nodes in a subgraph with a dynamic shape.

(3) Although a quantity of threads is not determined, an automatic threading technology is invented.

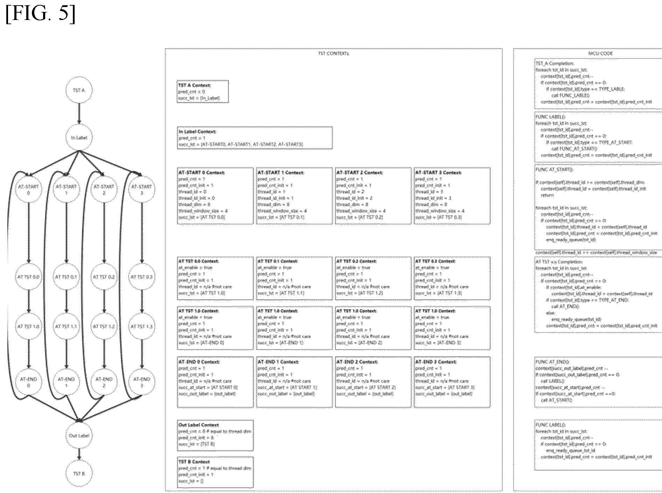

(a) A join operator such as inlabel, AT-start, AT-end, and outlabel is inserted at a start and an end of the subgraph. As shown in FIG. 5 (FIG. 5 is a diagram of join operators), inlabel and outlabel indicate the start and the end of the subgraph. An operator name may be any name. AT-start and AT-end indicate a start operator and an end operator of each thread. AT-start and AT-end descriptors contain threadid (a number of a thread) and threadnum (a quantity of threads in total). outlabel records a total quantity of threads to be executed. Each time a thread is executed, a value of outlabel decreases by 1. When a value of threadnum in outlabel decreases to 0, the subgraph is executed.

(b) Only threads of which a quantity is thread window size need to be expressed. A quantity of redundant threads=threadnum-thread window size. The threads may be reused during execution. In this way, threadmun tasks may be fixedly expressed in the compilation state. After a specific thread is executed, one thread in threadnum-thread window size threads is replaced with a thread in thread window size threads to implement reuse.

(4) A shape-related parameter is updated during dynamic compilation.

2. Dynamic compilation

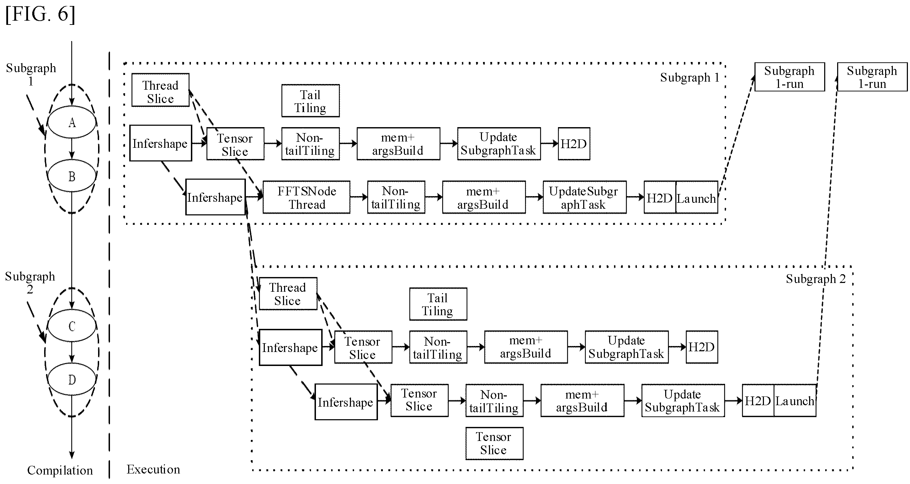

FIG. 6 shows dynamic compilation.

(1) Tasks of subgraphs are concurrently executed in a pipeline manner on a host side. The subgraph is dynamically compiled on the host to derive shape information. A quantity of threads in the subgraph is determined based on the foregoing algorithm, memories are allocated, information in the tasks of the subgraph that is not obtained in a compilation state is updated (an actual value can be calculated only when an actual shape is obtained during dynamic compilation), information required by a device is transferred from the host to the device, and launch dynamic of a thread task is initiated to trigger the device to execute the task. A plurality of subgraphs may be concurrently executed in a pipeline manner on the host. After a shape of a last node is obtained by performing infershape in a previous subgraph, a next subgraph obtains a shape of a 1st node. In this way, a host of the next subgraph starts execution. Therefore, the plurality of subgraphs can be executed in a pipeline manner.

(2) Node tasks in a subgraph are concurrently executed in a pipeline manner on a host side. There are a plurality of operators in the subgraph. Operations performed by the operators on the host are similar. The only difference is that a next operator depends on a shape of a previous operator. Therefore, after the shape of the previous operator is obtained, the next operator can be executed in the pipeline manner.

(3) During execution, an unknown part in the compilation state of the dynamic shape in the subgraph is refreshed on the host side. When the dynamic shape is in the compilation state, many execution information cannot be determined because the shape is unknown. After the shape is obtained, an actual value of the execution information can be refreshed into the task.

(4) A dynamic shape operator (a shape of the next operator depends on an output value of the previous operator, and this operator is referred to as the dynamic shape operator) is not in a subgraph scope. A shape or other information needs to be obtained through interaction between the host and the device. Execution is performed in a single operator manner or an independent subgraph manner.

3. Dynamic execution

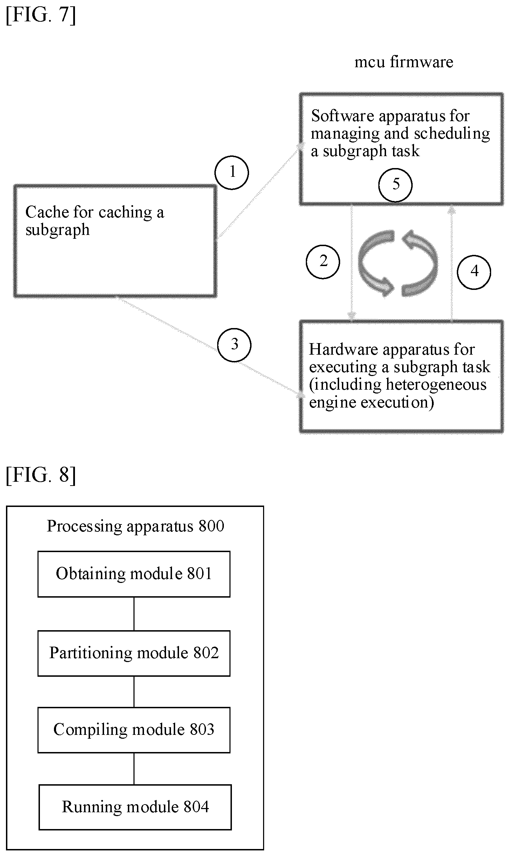

As shown in FIG. 7, a subgraph execution process is completed through cooperation of software and hardware, and the software is for scheduling the subgraph. A specific process is as follows:

(1) The hardware pre-loads a subgraph to a cache and notifies a device scheduling software to start execution. The device scheduling software reads a task that is initially ready (a number of a previous node is 0).
(2) The device scheduling software pushes the ready task to a hardware execution apparatus for execution.
(3) The hardware execution apparatus reads a task descriptor from the cache, and executes the ready task, including scheduling the task to a plurality of heterogeneous engines for execution.
(4) The hardware completes a subgraph task and notifies MCU software of the completion.
(5) The device scheduling software obtains a post-sequence task of a currently executed task, counts a pre-sequence node of the post-sequence task, and when the count is 0, pushes the task to the hardware execution apparatus for execution.
(6) Steps (2) to (5) are performed repeatedly until the subgraph is executed.

For task sequences of which a quantity is thread windows size provided by subgraph compilation, after executing a specific thread task sequence, the device scheduling replaces the entire thread with a new thread and modifies information such as a thread ID in new thread context, until all threads are executed.

In addition, a QoS value of the thread subtask is adjusted based on the foregoing optimal pipeline. When the subgraphs are concurrently executed, priorities of computing resources and bandwidths are coordinated to ensure efficient execution of the entire graph. The eight threads can be concurrently executed, which preempts a memory bandwidth. A QoS may allocate a bandwidth according to the policies. The bandwidth indicates that a computer has many buses. A higher the bus bandwidth indicates better performance.

FIG. 8 is a diagram of a structure of a processing apparatus 800 according to an embodiment of this application. The processing apparatus 800 may be used in the foregoing hardware system, and includes an obtaining module 801, a partitioning module 802, a compiling module 803, and a running module 804.

The obtaining module 801 is configured to obtain a to-be-compiled computational graph, where a dynamic shape is used for input data of the computational graph, and the computational graph includes a plurality of operators. The partitioning module 802 is configured to partition the computational graph to obtain a plurality of subgraphs, where any one of the subgraphs includes at least one of the operators in the computational graph. The compiling module 803 is configured to generate a plurality of executable tasks through compiling based on the plurality of subgraphs. The running module 804 is configured to run the computational graph based on the plurality of executable tasks.

In a possible implementation, the partitioning module 802 is specifically configured to: obtain slice information of the plurality of operators, where the slice information indicates an input data slice manner supported by a corresponding operator; and obtain the plurality of subgraphs based on the slice information of the plurality of operators.

In a possible implementation, when a first subgraph includes n operators, the n operators are continuously arranged, input data slice manners supported by the n operators are the same, n>1, and the first subgraph is any one of the plurality of subgraphs.

In a possible implementation, the compiling module 803 is specifically configured to: perform static compilation on the plurality of subgraphs separately to obtain a plurality of thread tasks; obtain to-be-processed data; and perform dynamic compilation on the plurality of thread tasks based on the to-be-processed data, to obtain the plurality of executable tasks.

In a possible implementation, the compiling module 803 is specifically configured to: obtain a total quantity of engines in the first subgraph, where the first subgraph is any one of the plurality of subgraphs, the first subgraph includes m operators, and m≥1; determine N based on the total quantity of engines in the first subgraph, where N>1, and N indicates a quantity of threads that can run concurrently; and obtain N thread tasks, where any one of the thread tasks includes m structures, and the N thread tasks correspond to N threads.

In a possible implementation, the compiling module 803 is specifically configured to: obtain a dynamic shape of the to-be-processed data; and update unknown parameters in the plurality of thread tasks based on the dynamic shape of the to-be-processed data, to obtain the plurality of executable tasks.

In a possible implementation, the compiling module 803 is further configured to obtain threadnum based on the dynamic shape of the to-be-processed data, and threadnum indicates a quantity of slices of the to-be-processed data.

In a possible implementation, the compiling module 803 is specifically configured to substitute the dynamic shape into a preset formula to obtain threadnum. The preset formula indicates a correspondence between the dynamic shape and threadnum.

In a possible implementation, the compiling module 803 is specifically configured to obtain threadnum for a purpose that the engine in the first subgraph works in full load.

In a possible implementation, the compiling module 803 is further configured to insert a join operator at a start and an end of the first subgraph.

In a possible implementation, the compiling module 803 is further configured to optimize the m operators included in the first subgraph.

In a possible implementation, the compiling module 803 is further configured to perform a cache operation on the N thread tasks.

In a possible implementation, the running module 804 is specifically configured to schedule, based on the plurality of executable tasks, threadnum sub-tasks included in the first subgraph by reusing the executable task. threadnum indicates the quantity of the slices of the to-be-processed data of the first subgraph, each sub-task includes m operators, m≥1, and the first subgraph is any one of the plurality of subgraphs.

In a possible implementation, the running module 804 is further configured to allocate a bandwidth to the plurality of executable tasks for a purpose of minimizing total running duration.

The apparatus in this embodiment may be configured to perform the technical solution of the method embodiment shown in FIG. 3, an implementation principle and a technical effect are similar, and details are not described herein again.

During implementation, the steps of the foregoing method embodiment may be completed by using an integrated logic circuit of hardware in a processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the method disclosed in embodiments of this application may be directly presented as being performed and completed by a hardware encoding processor, or performed and completed by a combination of hardware and a software module in the encoding processor. A software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing method in combination with hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through illustrative but not limited description, many forms of RAMs may be used, for example, a static random access memory (static RAM, SRAM), a dynamic RAM (dynamic RAM, DRAM), a synchronous DRAM (synchronous DRAM, SDRAM), a double data rate SDRAM (double data rate SDRAM, DDR SDRAM), an enhanced synchronous dynamic random access memory (enhanced SDRAM, ESDRAM), a synchronous link DRAM (synchlink DRAM, SLDRAM), and a direct rambus RAM (direct rambus RAM, DR RAM). It should be noted that the memories of the system and method described herein are intended to include, but are not limited to, these and any other suitable types of memories.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the method in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A computational graph processing method, comprising:

    obtaining a to-be-compiled computational graph, wherein a dynamic shape is used for input data of the computational graph, and the computational graph comprises a plurality of operators;
    partitioning the computational graph to obtain a plurality of subgraphs, wherein any one of the subgraphs comprises at least one of the operators in the computational graph;
    generating a plurality of executable tasks through compiling based on the plurality of subgraphs; and

running the computational graph based on the plurality of executable tasks.

2. The method according to claim 1, wherein the partitioning the computational graph to obtain a plurality of subgraphs comprises:

obtaining slice information of the plurality of operators, wherein the slice information indicates an input data slice manner supported by a corresponding operator; and
obtaining the plurality of subgraphs based on the slice information of the plurality of operators.

3. The method according to claim 2, wherein when a first subgraph comprises n operators, the n operators are continuously arranged, input data slice manners supported by the n operators are the same, n>1, and the first subgraph is any one of the plurality of subgraphs.

4. The method according to any one of claims 1 to 3, wherein the generating a plurality of executable tasks through compiling based on the plurality of subgraphs comprises:

performing static compilation on the plurality of subgraphs separately to obtain a plurality of thread tasks;
obtaining to-be-processed data; and
performing dynamic compilation on the plurality of thread tasks based on the to-be-processed data, to obtain the plurality of executable tasks.

5. The method according to claim 4, wherein the performing static compilation on the plurality of subgraphs separately to obtain a plurality of thread tasks comprises:

obtaining a total quantity of engines in the first subgraph, wherein the first subgraph is any one of the plurality of subgraphs, the first subgraph comprises m operators, and m≥1;
determining N based on the total quantity of engines in the first subgraph, wherein N>1, and N indicates a quantity of threads that can run concurrently; and
obtaining N thread tasks, wherein any one of the thread tasks comprises m structures, and the N thread tasks correspond to N threads.

6. The method according to claim 4 or 5, wherein the performing dynamic compilation on the plurality of thread tasks based on the to-be-processed data, to obtain the plurality of executable tasks comprises:

obtaining a dynamic shape of the to-be-processed data; and
updating unknown parameters in the plurality of thread tasks based on the dynamic shape of the to-be-processed data, to obtain the plurality of executable tasks.

7. The method according to claim 6, further comprising:
obtaining threadnum based on the dynamic shape of the to-be-processed data, wherein threadnum indicates a quantity of slices of the to-be-processed data.

8. The method according to claim 7, wherein the obtaining threadnum based on the dynamic shape of the to-be-processed data comprises:
substituting the dynamic shape into a preset formula to obtain threadnum, wherein the preset formula indicates a correspondence between the dynamic shape and threadnum.

9. The method according to claim 7 or 8, wherein the obtaining threadnum based on the dynamic shape of the to-be-processed data comprises:
obtaining threadnum for a purpose that the engine in the first subgraph works in full load.

10. The method according to any one of claims 5 to 9, further comprising:
inserting a join operator at a start and an end of the first subgraph.

11. The method according to any one of claims 5 to 10, further comprising:
optimizing the m operators comprised in the first subgraph.

12. The method according to any one of claims 5 to 11, further comprising:
performing a cache operation on the N thread tasks.

13. The method according to any one of claims 1 to 12, wherein the running the computational graph based on the plurality of executable tasks comprises:
scheduling, based on the plurality of executable tasks, threadnum sub-tasks comprised in the first subgraph by reusing the executable task, wherein threadnum indicates the quantity of the slices of the to-be-processed data of the first subgraph, each sub-task comprises m operators, m≥1, and the first subgraph is any one of the plurality of subgraphs.

14. The method according to claim 13, further comprising:
allocating a bandwidth to the plurality of executable tasks for a purpose of minimizing total running duration.

15. A processing apparatus, comprising:

an obtaining module, configured to obtain a to-be-compiled computational graph, wherein a dynamic shape is used for input data of the computational graph, and the computational graph comprises a plurality of operators;

a partitioning module, configured to partition the computational graph to obtain a plurality of subgraphs, wherein any one of the subgraphs comprises at least one of the operators in the computational graph;

a compiling module, configured to generate a plurality of executable tasks through compiling based on the plurality of subgraphs; and

a running module, configured to run the computational graph based on the plurality of executable tasks.

16. The apparatus according to claim 15, wherein the partitioning module is specifically configured to: obtain slice information of the plurality of operators, wherein the slice information indicates an input data slice manner supported by a corresponding operator; and obtain the plurality of subgraphs based on the slice information of the plurality of operators.

17. The apparatus according to claim 16, wherein when a first subgraph comprises n operators, the n operators are continuously arranged, input data slice manners supported by the n operators are the same, n>1, and the first subgraph is any one of the plurality of subgraphs.

18. The apparatus according to any one of claims 15 to 17, wherein the compiling module is specifically configured to: perform static compilation on the plurality of subgraphs separately to obtain a plurality of thread tasks; obtain to-be-processed data; and perform dynamic compilation on the plurality of thread tasks based on the to-be-processed data, to obtain the plurality of executable tasks.

19. The apparatus according to claim 18, wherein the compiling module is specifically configured to: obtain a total quantity of engines in the first subgraph, wherein the first subgraph is any one of the plurality of subgraphs, the first subgraph comprises m operators, and m≥1; determine N based on the total quantity of engines in the first subgraph, wherein N>1, and N indicates a quantity of threads that can run concurrently; and obtain N thread tasks, wherein any one of the thread tasks comprises m structures, and the N thread tasks correspond to N threads.

20. The apparatus according to claim 18 or 19, wherein the compiling module is specifically configured to: obtain a dynamic shape of the to-be-processed data;

and update unknown parameters in the plurality of thread tasks based on the dynamic shape of the to-be-processed data, to obtain the plurality of executable tasks.

21. The apparatus according to claim 20, wherein the compiling module is further configured to obtain threadnum based on the dynamic shape of the to-be-processed data, wherein threadnum indicates a quantity of slices of the to-be-processed data.

22. The apparatus according to claim 21, wherein the compiling module is specifically configured to substitute the dynamic shape into a preset formula to obtain threadnum, wherein the preset formula indicates a correspondence between the dynamic shape and threadnum.

23. The apparatus according to claim 21 or 22, wherein the compiling module is specifically configured to obtain threadnum for a purpose that the engine in the first subgraph works in full load.

24. The apparatus according to any one of claims 19 to 23, wherein the compiling module is further configured to insert a join operator at a start and an end of the first subgraph.

25. The apparatus according to any one of claims 19 to 24, wherein the compiling module is further configured to optimize the m operators comprised in the first subgraph.

26. The apparatus according to any one of claims 19 to 25, wherein the compiling module is further configured to perform a cache operation on the N thread tasks.

27. The apparatus according to any one of claims 15 to 26, wherein the running module is specifically configured to schedule, based on the plurality of executable tasks, threadnum sub-tasks comprised in the first subgraph by reusing the executable task, wherein threadnum indicates the quantity of the slices of the to-be-processed data of the first subgraph, each sub-task comprises m operators, m≥1, and the first subgraph is any one of the plurality of subgraphs.

28. The apparatus according to claim 27, wherein the running module is further configured to allocate a bandwidth to the plurality of executable tasks for a purpose of minimizing total running duration.

29. A device, comprising:

one or more processors; and
a memory, configured to store one or more programs, wherein

when the one or more programs are executed by the one or more processors, the one or more processors are enabled to implement the method according to any one of claims 1 to 14.

30. A computer-readable storage medium, comprising a computer program, wherein when the computer program is executed on a computer, the computer is enabled to perform the method according to any one of claims 1 to 14.

31. A computer program product, wherein the computer program product comprises computer program code, and when the computer program code is run on a computer, the computer is enabled to perform the method according to any one of claims 1 to 14.

[FIG. 1]

[FIG. 2]

[FIG. 3]

300

```
┌─────────────────────────────────────────┐
│  Obtain a to-be-compiled computational   │  ⟋⟍ 301
│                 graph                    │
└─────────────────────────────────────────┘
                     │
                     ▼
┌─────────────────────────────────────────┐
│  Partition the computational graph to    │  ⟋⟍ 302
│    obtain a plurality of subgraphs       │
└─────────────────────────────────────────┘
                     │
                     ▼
┌─────────────────────────────────────────┐
│ Generate a plurality of executable tasks │  ⟋⟍ 303
│ through compiling based on the plurality │
│               of subgraphs               │
└─────────────────────────────────────────┘
                     │
                     ▼
┌─────────────────────────────────────────┐
│  Run the computational graph based on    │  ⟋⟍ 304
│    the plurality of executable tasks     │
└─────────────────────────────────────────┘
```

[FIG. 4]

[FIG. 5]

[FIG. 6]

EP 4 597 362 A1

[FIG. 7]

mcu firmware

Software apparatus for managing and scheduling a subgraph task

⑤

①

Cache for caching a subgraph

②

④

③

Hardware apparatus for executing a subgraph task (including heterogeneous engine execution)

[FIG. 8]

Processing apparatus 800

Obtaining module 801

Partitioning module 802

Compiling module 803

Running module 804

# INTERNATIONAL SEARCH REPORT

| International application No. |
| --- |
| **PCT/CN2023/102301** |

| A. | CLASSIFICATION OF SUBJECT MATTER |
| --- | --- |

G06N3/04(2023.01)i;  G06N3/08(2023.01)i;  G06F8/30(2018.01)i

According to International Patent Classification (IPC) or to both national classification and IPC

| B. | FIELDS SEARCHED |
| --- | --- |

Minimum documentation searched (classification system followed by classification symbols)

IPC:  G06N G06F

Documentation searched other than minimum documentation to the extent that such documents are included in the fields searched

Electronic data base consulted during the international search (name of data base and, where practicable, search terms used)

CNABS, VEN, CNTXT, WOTXT, USTXT, EPTXT, CNKI, IEEE: 计算图, 算子, 子图, 编译, 输入数据, 张量, 动态, 形状, 优化, 调度, 线程, graph, sub graph, operator, compile, input data, tensor, shape, optimization, thread

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114580653 A (ALIBABA CLOUD COMPUTING LTD.) 03 June 2022 (2022-06-03) description, paragraphs 28-62 and 68-72 | 1-31 |
| A | CN 114385181 A (PHYTIUM TECHNOLOGY CO., LTD.) 22 April 2022 (2022-04-22) entire document | 1-31 |
| A | CN 111338635 A (TENCENT TECHNOLOGY (SHENZHEN) CO., LTD.) 26 June 2020 (2020-06-26) entire document | 1-31 |
| A | US 2019303762 A1 (XILINX, INC.) 03 October 2019 (2019-10-03) entire document | 1-31 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 August 2023** | **17 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102301**

| Patent document cited in search report | | | Publication date (day/month/year) | Patent family member(s) | | | Publication date (day/month/year) |
|---|---|---|---|---|---|---|---|
| CN | 114580653 | A | 03 June 2022 | None | | | |
| CN | 114385181 | A | 22 April 2022 | None | | | |
| CN | 111338635 | A | 26 June 2020 | None | | | |
| US | 2019303762 | A1 | 03 October 2019 | US | 11514324 | B2 | 29 November 2022 |
| | | | | CN | 110321999 | A | 11 October 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211277782